# EUROPEAN PATENT APPLICATION

(11) **EP 2 207 077 A1**
(43) Date of publication of application: **14.07.2010**
(21) Application number: 08022520.4
(22) Date of filing: 30.12.2008
(51) Int. Cl.: G06F 1/16, G06F 3/048, H04M 1/725

(54) **Apparatus and method for presenting communication items**

(71) Applicant: Vodafone Holding GmbH, 40213 Düsseldorf (DE)
(72) Inventor: Prasad, Krishna, 40219 Düsseldorf (DE); Lee, Sabrina, 40219 Düsseldorf (DE)
(74) Representative: Jostarndt, Hans-Dieter

(57) **Abstract**

A mobile communication device comprising a radio interface, an input unit, a display, an acceleration sensor, and a processing means is suggested. The communication device is arranged to receive a data item. The processing means associates the data item with a graphical element and controls the display to present the graphical element on the display. The processing means is connected to the acceleration sensor and receives output data from the acceleration sensor. The processing means manipulates the presentation of the graphical elements on the display as a function of the output data of the acceleration sensor. In particular, the graphical elements on the screen move slowly downwards to the lowest part of the screen similar like snow flakes in a real snow globe. The appearance of the graphical elements can be changed by the user simply by turning the mobile communication device or by shaking it.

## Description

### Technical field

The present invention relates to an apparatus for providing access to data items by means of a mobile communication device provided with a screen. In particular the invention is related to an apparatus according to claim 1. The invention is also related to a method for providing access to data items.

### Background of the invention

Today there is an increasing number of digital communication devices such as personal digital assistants (PDA), portable computers, mobile telephones, palmtop computers, etc. Sometimes these devices are also equipped with cameras for taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. The number of communication items is increased even further because one and the same communication item of the above mentioned types is frequently copied to a plurality of recipients. Because of the sheer quantity it becomes consequently more and more difficult for individuals to organize their communication items on a mobile communication device especially if the communication device has only a small screen,

There are different approaches to help the user in managing a large plurality of communication items. The approaches include providing the user with different views of the communication items such as a list view or a time line view. The list view contains simply a list of all received communication items. The list is sorted according to a property of the communication items. The property according to which the list is sorted may be selected by the user by applying filter functions to the entirety of the communication items stored on the mobile communication device. The time line view puts icons associated with each communication item on a time line according to the receipt time of the communication item regardless of their properties. The purpose of the different views is to help the user to find a particular communication item by presenting the communication items in different ways.

It is known to set up different kinds of directories in which the communication items are listed in a sequential order according to different sorting criteria such as the name of the sender, receiving time, send time, subject and the like. However, conventional sorting mechanisms still do not solve completely the issue of finding a particular communication item among a big quantity of communication items and the presentation of a large number of communication items remains difficult to organize in this way. In general it is very helpful for a user if he can sort the communication items according to one or several characteristics.

From US 2005/010864381 a topographic presentation of media files in a media diary application is known. The suggested topographic presentation is essentially realized on the calendar in which different kinds of communication items are graphically indicated allowing a user to preselect the kind of communication item he is looking for.

US 2005/0105374A1 describes a media diary application which is implemented in a digital communication device. The media diary provides for a calendar view of calendared events and reminders and a media view of media items associated with a past calendared event or date. The known media diary also provides for a time line view that combines both the calendar view and media view into a composite view that incorporates a time line.

Many attempts were made to help the users to organize communication items in a more efficient way or just to provide an alternative, which is convenient for some users and their purposes.

The object of the present invention is to suggest a new way of presenting communication items or more generally speaking communication items on a portable device having a display screen.

### Brief description of the invention

The present invention proposes a concept for Improving the presentation of communication items on a mobile communication device.

According to a first aspect, the invention suggests a mobile communication device comprising a radio interface, an input unit, a display, an acceleration sensor, and a processing means. The communication device is arranged to receive a data item. The processing means associates the data item with a graphical element and controls the display to present the graphical element on the display. The processing means is connected to the acceleration sensor and receives output data from the acceleration sensor. The processing means manipulates the presentation of the graphical elements on the display as a function of the output data of the acceleration sensor.

According to an advantageous embodiment of the invention the acceleration sensor is effective to measure the acceleration of the mobile communication device in several directions. Provided that the acceleration is measured in all three dimensions this embodiment translates any movement of the communication device into output signals of the acceleration sensor which are then available to modify the presentation of the graphical elements.

According to a second aspect the present invention suggests a method for providing information by graphics that constitute a man machine interface, wherein the method comprises the following steps:
- receiving a data item;
- generating a graphical element for each data item;
- associating the graphical element to the corresponding data item;
- displaying the graphical element on a screen; and
- modifying the position of the graphical element as a function of time.

Advantageously, the method further comprises the step of generating the graphical element as a function of the size of the data item.

It has been found useful if the method further comprises the following step of generating the graphical element as a function of the type of each data item.

In an embodiment of the invention the method further comprises the following step of modifying the position of the graphical element according to an equation according to which the positions of pixel elements on the screen evolve. In this case the method may comprise the step of adapting a parameter of the equation.

In a convenient embodiment the method further comprises the step of repositioning the graphical elements on the screen in response to an acceleration of the mobile communication device.

Advantageously, the method further comprises the step of freezing the movement of graphical elements on the screen.

Further features and advantages of the invention will become apparent when reading the detailed description appended with drawings.

### Short description of the drawing

In the drawing exemplary embodiments of the invention are illustrated. It shows:
- Figure 1: a top view of the mobile communication device according to the invention;
- Figure 2: a schematic block diagram of the communication device; and
- Figures 3a to 3c of figure 1.: viewing modes of the screen of the mobile communication device

Similar or identical features and elements are labelled with the same reference numbers in the drawing.

### Detailed description

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

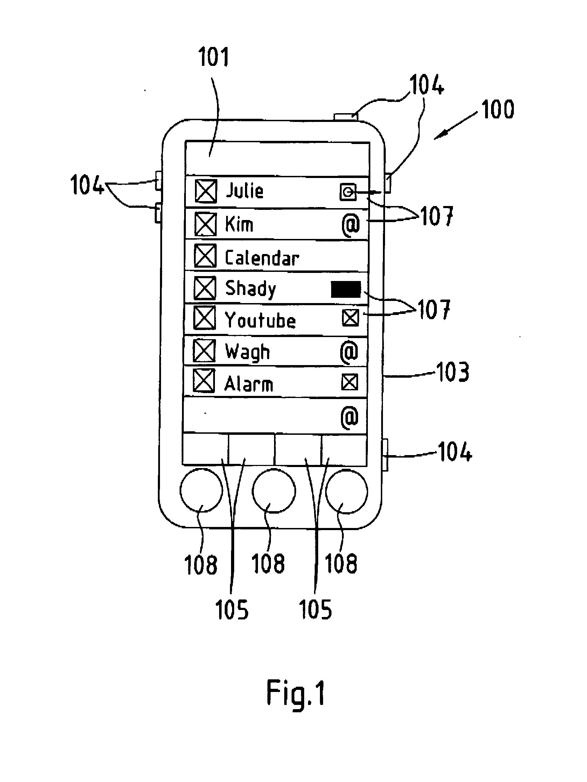

Figure 1 shows a mobile communication device 100 according to the present invention. Such as a mobile phone, a PDA (personal digital assistant) or the like, which is connected to a wireless public land mobile network (PLMN). The PLMN is a wireless telecommunication network according to GSM standard or according to the UMTS standard for example. The user of the communication device 100 can set up a connection to other communication devices through the network.

For the sake of the simplicity the present invention will be described in the following with reference to a PDA having a relatively large screen 101 covering a major part of the top surface 102 of the housing 103 of the mobile communication device 100. However, the present invention shall not be limited to PDAs.

On the periphery of the housing 103 there are buttons 104 provided enabling a user to control functionalities of the communication device 100. In addition to that, there are soft keys forming a command bar 105 available for the user for further control functionalities. In its main portion the screen 101 displays communication items 107 received by the communication device. Each communication item 107 displays a short name of the sender as well as an icon symbolizing the type of communication, e.g. e-mail, SMS etc. Finally, there are three hard keys 108 provided in the lower part of the top surface 102 of the housing 103. Similar to the buttons 104 the hard keys 108 are designed to control the functionalities of the mobile communication device 100.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

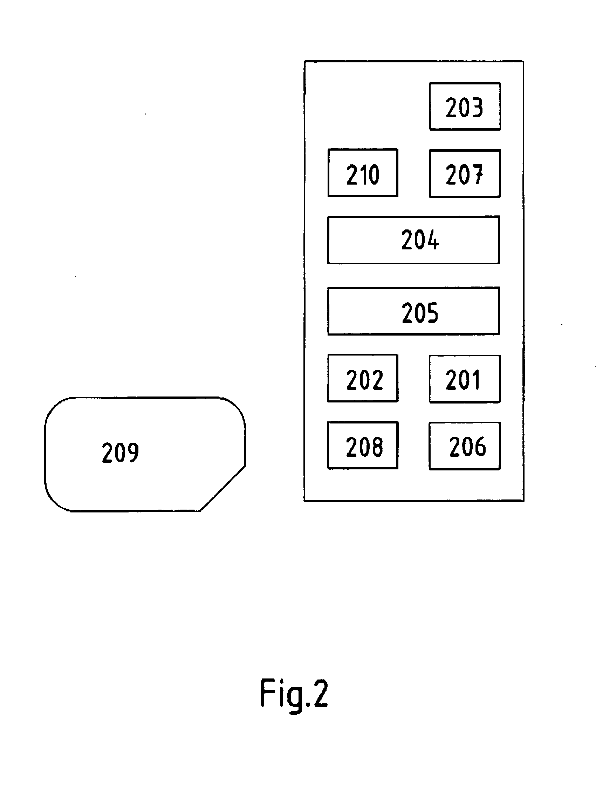

Figure 2 shows a schematic block diagram of the mobile communication device 100. The mobile communication device 100 comprises a mobile terminal 200 including a main processor 201 for controlling the operation of the mobile terminal 200. A memory 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the PLMN mentioned above.

For capturing acoustic signals, particularly for capturing speech from the user of the mobile terminal 200, the mobile terminal 200 comprises a microphone 206. For outputting acoustic signals, the mobile terminal 200 comprises a loudspeaker 207. Moreover, the mobile terminal 200 comprises the screen 101, e.g. a liquid crystal display (LCD) 204. An input unit 205 interfaces the buttons 104, the command bar 105 and the hard keys 108.

By means of a card reader unit 208, the mobile terminal 200 can be connected to a subscriber identity module (SIM card) 209 to form the mobile communication device 100. The subscriber identity module 209 is a so-called smart card, which can be inserted into a card receptacle of the mobile terminal 200 that holds the card in a position, in which its contact elements are connected to corresponding contact elements of the card reader unit 208 of the mobile terminal 200. The subscriber identity module 209 may be configured as a subscriber identity module (SIM) according to the GSM standard or as a universal subscriber identity module (USIM) according the UMTS standard, for example.

Finally, the mobile terminal 200 is equipped with a sensor 210 which is effective to sense accelerations in all 3 dimensions. The sensor 210 is arranged to be able to sense and measure the acceleration in each direction separately. The output signals of the sensor 210 representative of the acceleration of the mobile terminal 200 are provided to the main processor 201. Today such acceleration sensors are physically small enough and have an energy consumption that is low enough to be utilized in a mobile communication device. The acceleration sensor 210 is a commercially available micromechanical device. Similar devices are used for example in cameras for image stabilisation.

The main processor 201 evaluates the output signals of the sensor 210. In this way the main processor 210 determines the position of the mobile communication device 100. The main processor 210 also determines if the mobile communication device 100 is moved and if yes, in which direction. The main processor 201 also controls the display 204 either directly or by means of a display controller which is not shown in Figure 2.

The mobile communication device 100 which has been described so far is enabled to provide the user with a list as well as with the time line view as it has been described in the background of the present invention.

Complementary to the presentation of the communication items which are already known in the prior art the present invention suggests another presentation of the communication items making use of the acceleration sensor 210. The new type of presentation will be referred to as "snow globe presentation".

The basic idea of the snow globe presentation is that the icons associated with communication items and displayed on the screen 101 always sink to the lowest part of the screen 101 as if the icons were subject to a gravitational force, This sinking occurs without any user interaction.

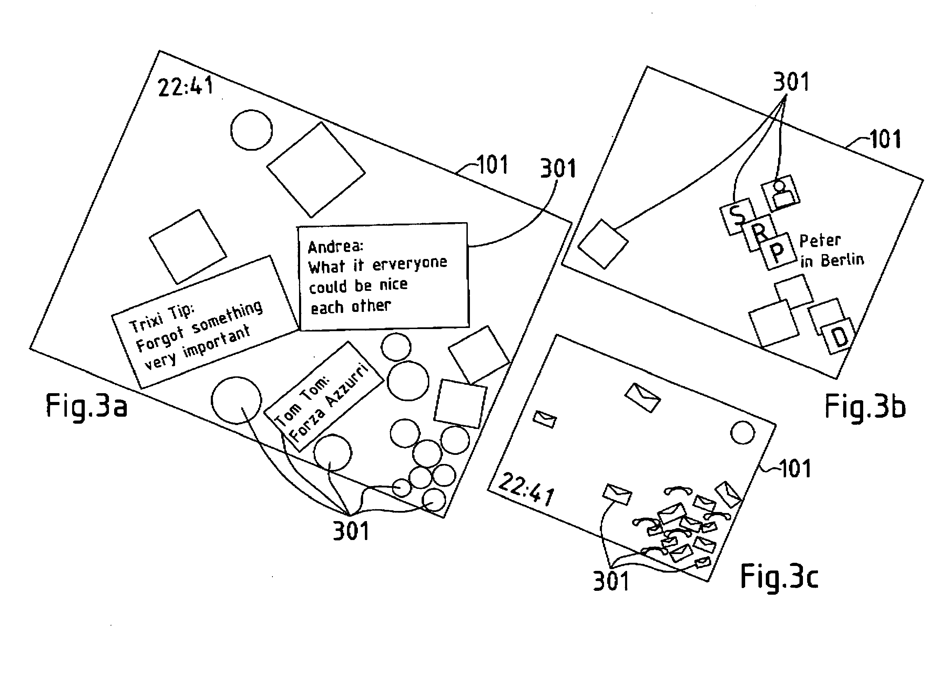

In Figures 3a to 3c the situation is illustrated in more detail.

Figure 3a shows a situation in which icons 301 sink into the lower right corner of the screen 101 because the mobile communication device 100 is held by the user such that this very corner is the lowest part of the screen 101. The icons 301 can be any kind of graphical element not only those graphical elements shown in figures 3a to 3c. The main processor 201 tracks the movement of the communication device 100 and is therefore enabled to determine the lowest part of the screen 101. An application running on the main processor 201 in the snow globe presentation calculates a movement of the icons on the screen. The movement corresponds to the application of a constant force on objects represented by the icons such as a gravitational force.

In a situation in which the mobile communication device 100 lays on a desk and is not moved when the snow globe presentation mode is activated it may happen that the acceleration sensor 210 cannot identify which part of the screen is the lowest to determine in which direction the icons should move on the screen 101, In such a situation it is simply assumed that the part of the screen 101 where the soft keys 105 are located (figure 1) is the lowest part of the screen. The user can override this assumption by moving the mobile communication device 100 such that the output signals of the acceleration sensor 210 allow identifying unambiguously another part of the screen as being the lowest part.

In the equation describing the movement of the objects there is not only the constant force driving the movement but also a counter action similar to the counter action that a viscous medium develops when an object is driven through the medium. Due to this configuration the objects i.e., the icons on the screen 101 are moving slowly downwards to the lowest part of the screen similar like snow flakes in a real snow globe. In order to realize a slower or faster sinking of the icons on the screen 101 the objects are associated with different masses.

In a similar way in another embodiment of the invention the size of the icons is varied as a function of their contents, e.g. the bigger the data file which is associated with an icon the bigger is representation of the icon on the screen 101. In yet another embodiment the size of the icons depends on the type of data file, e.g. e-mails are associated with a bigger icon than SMS messages, SMS messages are associated with a bigger icon than a telephone call etc. However, this is only one possibility. It may also be provided that the size of the icons becomes larger if the corresponding communication item is received from an important contact. In this sense there may be a dynamic change during the day time of what an important is. That means that during normal office hours other contacts are important than in the evening or during the weekend.

In an embodiment of the invention the settings of the mobile communication device 100 may be adjusted to change the gravitational force and/or the viscous counter action to adapt the movement of the icons over the screen according to the preferences of the user. Simply by shaking the mobile communication device 100 the graphical elements or icons 301 are thrown across the screen 101 like snow flakes in a real snow globe. Alternatively, the user may turn the mobile communication device in another direction to make another part of the screen 101 the lowest part of the screen. Both actions change the appearance of the presentation of the icons of the communication items in a convenient and intuitive way. After either one or both of the actions have taken place the communication items float again across the screen and are displayed to the user in a sequential manner without requiring any additional user interaction. To facilitate the search for a particular communication item one embodiment of the invention is provided with a functionality of enlarging the icon which passing the centre of the screen. In enlarged icons it is possible to display additional information such as the sender of the communication item or some text if it is a text message.

In a convenient development of the latter embodiment a freeze function is provided to stop any further movement of the icons across the screen if the user desires to have a closer look to those icons which are presented to him in this moment. The freeze function is triggered by a user interaction e.g. by pressing one of the buttons 104.

Figures 3b and 3c illustrate different kinds of icons and presentations on the screen.
Figure 3b shows a presentation which is limited to photos by applying a corresponding filter function which is available on the mobile communication device. Also other filter functions which are available to modify the list view of communication items can be applied to the snow globe presentation. Obviously, the application of other filter functions produces different views. Finally, figure 3c shows a presentation which displays only symbols for different kinds of messages but not their contents.

### List of reference numerals

- 100: communication device
- 101: screen
- 102: top surface
- 103: housing
- 104: buttons
- 105: command bar
- 107: communication items
- 108: hard key
- 200: mobile terminal
- 201: main processor
- 202: memory
- 203: radio interface
- 204: LCD display
- 205: input unit
- 206: microphone
- 207: loud speaker
- 208: card reader
- 209: SIM card
- 210: acceleration sensor
- 301: icon

## Claims

1. Mobile communication device comprising a radio interface (203), an input unit (205), a display (101, 204), an acceleration sensor (210), and a processing means (201), wherein the communication device is arranged to receive a data item, wherein the processing means (201) associates the data item with a graphical element (301) and controls the display (101,204) to present the graphical element (301) on the display, wherein the processing means is connected to the acceleration sensor (210) and receives output data from the acceleration sensor (210), and wherein the processing means (201) manipulates the presentation of the graphical elements (301) on the display (101) as a function of the output data of the acceleration sensor (210).

2. Mobile communication device according to claim 1 wherein the acceleration sensor (210) is effective to measure the acceleration of the mobile communication device (100) in several directions.

3. Method for providing information by graphics that constitute a man machine interface, wherein the method comprises the following steps:
- receiving a data item;
- generating a graphical element for each data item;
- associating the graphical element (301) to the corresponding data item;
- displaying the graphical element (301) on a screen (101); and
- modifying the position of the graphical element as a function of time.

4. Method according to claim 3, wherein the method further comprises the step of generating the graphical element as a function of the size of the data item.

5. Method according to claim 3, wherein the method further comprises the following step of generating the graphical element as a function of the type of each data item.

6. Method according to claim 3, wherein the method further comprises the following step of modifying the position of the graphical element (301) according to an equation according to which the positions of pixel elements on the screen (101) evolve.

7. Method according to claim 6, wherein the method further comprises the step of adapting a parameter of the equation.

8. Method according to claim 3, wherein the method further comprises the step of repositioning the graphical elements (301) on the screen (101) in response to an acceleration of the mobile communication device (100).

9. Method according to claim 3, wherein the method further comprises the step of freezing the movement of graphical elements (301) on the screen (101).
